# EUROPÄISCHE PATENTSCHRIFT

(11) **EP 0 739 303 B1**
(45) Veröffentlichungstag und Bekanntmachung des Hinweises auf die Patenterteilung: **01.10.1997**
(21) Anmeldenummer: 95904433.0
(22) Anmeldetag: 08.12.1994
(51) Int. Cl.: B65G 45/16

(54) **VORRICHTUNG ZUM ABSTREIFEN VON VERUNREINIGUNGEN VON GURTBÄNDERN IN FÖRDERBANDANLAGEN IM BEREICH EINER ANTRIEBS- UND/ODER UMLENKROLLE**
DEVICE FOR STRIPPING SOILING FROM BELT BANDS IN CONVEYOR BELT INSTALLATIONS IN THE VICINITY OF A DRIVE AND/OR DEFLECTION ROLLER
DISPOSITIF POUR RETIRER LES IMPURETES PRESENTES SUR LES COURROIES DE CONVOYEURS A BANDES AU NIVEAU D'UN CYLINDRE MOTEUR OU DEFLECTEUR

(30) Priorität: 12.01.1994 DE 9400258 U
(43) Veröffentlichungstag der Anmeldung: 30.10.1996
(73) Patentinhaber: Schwarze, Hans-Otto, D-45665 Recklinghausen (DE)
(72) Erfinder: Schwarze, Hans-Otto, D-45665 Recklinghausen (DE)
(74) Vertreter: Türk, Gille, Hrabal, Leifert
(86) Internationale Anmeldenummer: EP9404075
(87) Internationale Veröffentlichungsnummer: WO9519310

(56) Entgegenhaltungen:
- EP-A- 0 254 977
- DE-A- 3 818 243

## Beschreibung

Die Erfindung betrifft eine Vorrichtung zum Abstreifen von Verunreinigungen von Gurtbändern in Förderbandanlagen im Bereich einer Antriebs- und/oder Umlenktrommel des Gurtbandes, welche die Merkmale des Oberbegriffes des Anspruches 1 aufweist.

Es sind Vorrichtungen bekannt (DE-C 23 65 415), die dazu dienen, hinter der Abwurfstelle noch am Gurtband anhaftendes Material zu entfernen.

Es ist ferner bekannt, Verunreinigungen an Gurtbändern unmittelbar an Antriebs- und Umlenktrommeln mittels Gummilippen abzustreifen, die in entsprechenden, am das Gurtband tragenden Gestell befestigten Halterungen angeordnet sind. Die Gummilippen liegen entweder rechtwinklig oder schräg an dem um die Umlenk- oder Antriebstrommel geführten Gurtband an.

Schließlich sind Förderbandabstreifer mit Abstreiflamellen bekannt (EP-A-O 450 133), die unmittelbar an der Abwurftrommel unterhalb der Abwurfparabel des Gurtbandes oder hinter der Abwurftrommel am Einlauf des Untergurtes in das das Gurtband tragende Gerüst eingesetzt werden.

Zum Abstreifen von Verunreinigungen von Gurtbändern in Förderbandanlagen ist es außerdem bekannt (EP-A-0 254 977), an einem System-Träger Abstreifelemente anzuordnen, wobei jedes Abstreifelement eine an einer Stütze befestigte Abstreiflamelle, die in betriebsbereiter Lage schälend am frei zwischen zwei Umlenktrommeln verlaufenden Untertrums des Gurtbandes anliegt, und ein Torsionsfedergelenk aufweist, an dem die Lamellenstütze derart um eine horizontale Achse schwenkbar angeordnet ist, daß sie beim Auftreffen von fest am Gurtband anhaftenden Hindernissen auf die Abstreiflamelle leicht wegschwenken und danach wieder in die betriebsbereite Lage am Gurtband zurückschwenken kann. Dabei ist das Torsionsfedergelenk jeder Stütze entweder an einer Einsteckvorrichtung befestigt, die in einer am System-Träger angebrachten Halterung angeordnet und federnd abgestützt ist, oder an einer am System-Träger festzulegenden Einstellspindel angeordnet. Die Längsachse jeder Einsteckvorrichtung schneidet das Gurtband in einem in Laufrichtung des Gurtbandes vor der Kontaktlinie der Abstreiflamelle liegenden Punkt.

Diese bekannte Vorrichtung ist zum Abstreifen von Gurtbändern im Bereich des freihängenden Untertrums jedes Gurtbandes bestimmt und ausgelegt, d.h. für ein System, bei dem die Abstreiflamellen nicht im Bereich eines Widerlagers und insbesondere nicht der Antriebs- oder Umlenktrommeln einer Förderbandanlage am Gurtband anliegen. Eine feinfühlige Einstellung und insbesondere Nachjustierung im laufenden Betrieb ist mit einfachen Mitteln weder vorgesehen noch möglich.

Es ist Aufgabe der Erfindung, eine Vorrichtung zum Abstreifen von Verunreinigungen an Gurtbändern zu schaffen, die sich zum Einsatz an Gurtbändern unmittelbar im Bereich einer Antriebs- und/oder Umlenktrommel einer Förderbandanlage eignet und die zuverlässig ohne die Gefahr von Beschädigungen des Gurtbandes arbeitet.

Zur Lösung dieser Aufgabe wird erfindungsgemäß eine Vorrichtung vorgeschlagen, welche die Merkmale des Anspruches 1 aufweist. Vorteilhafte Ausgestaltungen und Weiterbildungen der Erfindung sind Gegenstand der Unteransprüche.

In der Zeichnung sind bevorzugte Ausführungsbeispiele der erfindungsgemäßen Abstreifvorrichtung dargestellt, und zwar zeigt
- Fig. 1: eine Seitenansicht einer ersten Ausführungsform der Abstreifvorrichtung mit zwei an einem System-Träger in unterschiedlicher Lage angeordneten Abstreifelementen,
- Fig. 2: eine gegenüber Fig. 1 im Maßstab vergrößerte Seitenansicht der zwei an einem Systemträger angeordneten Abstreifelemente der Abstreifvorrichtung aus Fig. 1, teilweise geschnitten,
- Fig. 3: eine Seitenansicht der Abstreifvorrichtung wie in Fig. 2, jedoch in einer anderen Schnittdarstellung,
- Fig. 4: eine Seitenansicht eines Abstreifelementes der Vorrichtung aus Fig. 1 bis 3,
- Fig. 5: eine Vorderansicht einer zweiten Auführungsform der Abstreifvorrichtung, die zum Abstreifen eines Gurtbandes mehrere Abstreifelemente aufweist,
- Fig. 6: eine Draufsicht der Abstreifvorrichtung aus Fig. 5,
- Fig. 7: eine Seitenansicht der Abstreifvorrichtung aus Fig. 5 und 6 und
- Fig. 8: eine schematische Darstellung der geometrischen Verhältnisse von zweireihig angeordneten Abstreifelementen in betriebsbereiter Lage am Gurtband.

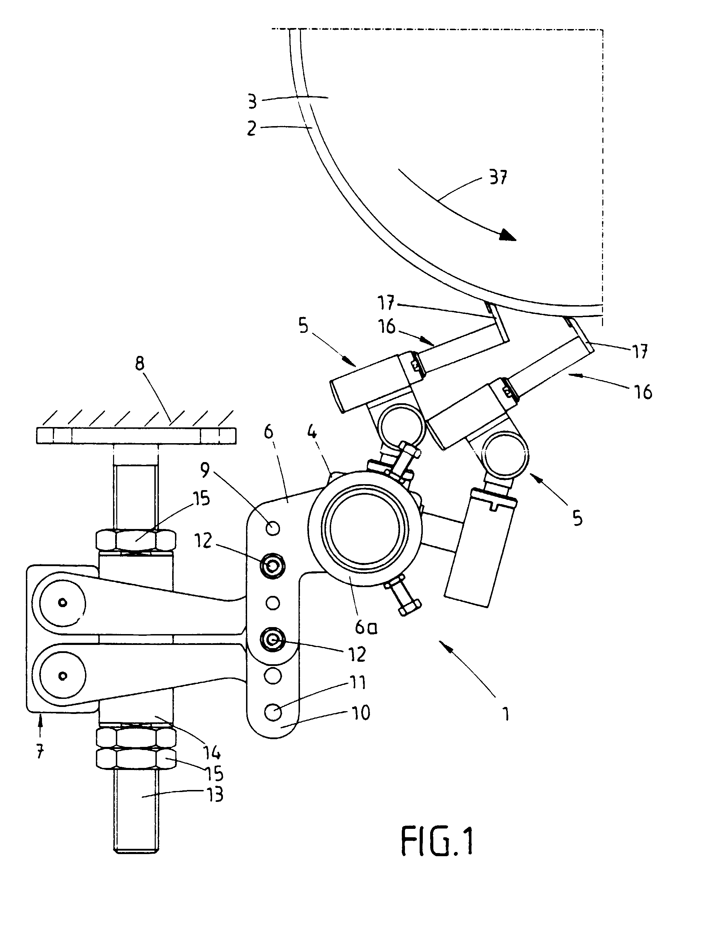

Die in Fig. 1 bis 4 dargestellte Vorrichtung 1 dient zum Abstreifen von Verunreinigungen von einem Gurtband 2 im Bereich einer Trommel 3. Die Trommel 3 kannn angetrieben oder eine Umlenktrommel ohne Antrieb sein.

Die Vorrichtung 1 hat einen System-Träger 4, an dem Abstreifelemente 5 angeordnet sind, die unten näher beschrieben werden.

Der System-Träger 4 ist an seinen beiden Enden über ein dort angeordnetes L-förmiges Profil 6 an jeweils einer Doppeltorsions-Federschwinge 7 befestigt.

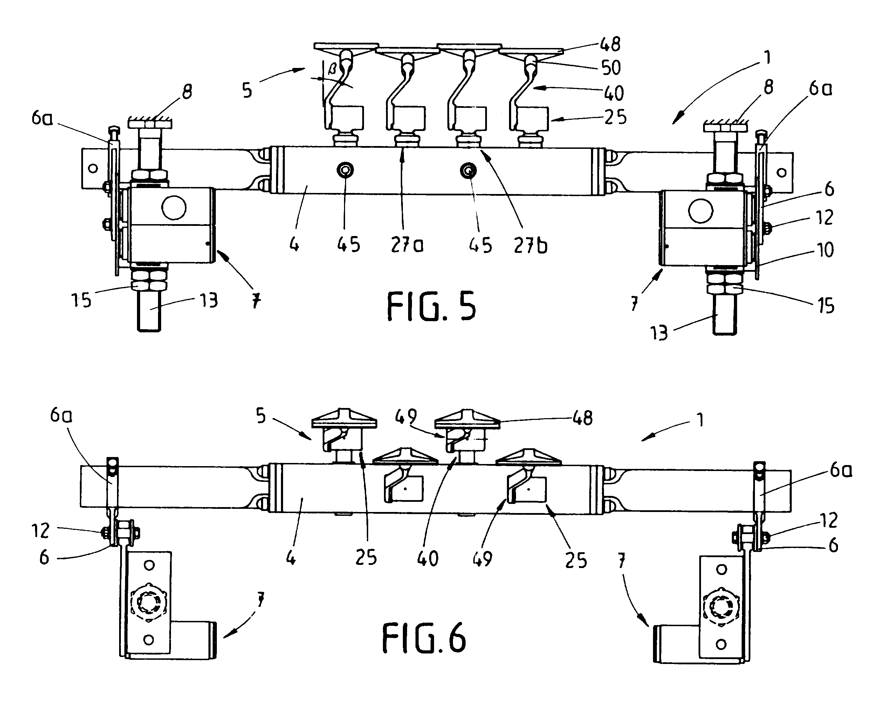

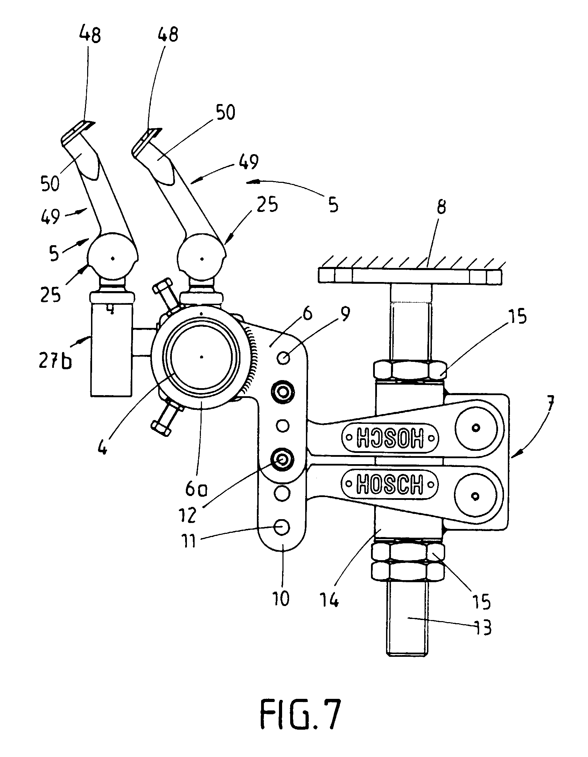

Jedes Profil 6 ist mit seinem kurzen Schenkel an einen Haltering 6a angeschweißt (vgl. auch Fig. 5 bis 7), der mittels Schrauben verstellbar an dem System-Träger 4 befestigt ist, und weist an seinem langen Schenkel eine Reihe von in gleichen Abständen zueinander angeordneten Bohrungen 9 auf. Die Doppeltorsions-Federschwinge 7 hat an ihrem dem System-Träger 4 zugewandten Ende ein plattenförmiges Anschlußelement 10, das ebenfalls in gleichen Abständen zueinander angeordnete Bohrungen 11 aufweist, die mit den Bohrungen 9 in dem Profil 6 fluchten. Das Profil 6 und das Anschlußelement 10 sind mittels Schrauben 12 miteinader verbunden.

An einem in Fig. 1 nur angedeuteten Gurtbandtrag-Gerüst 8 ist auf jeder Seite eine Gewindestange 13 befestigt, die durch eine mit der Doppeltorsions-Federschwinge 7 verbundene Führungsbuchse 14 greift. Die Führungsbuchse 14 wird durch auf die Gewindestange 13 aufgeschraubte Muttern 15 höhenverstellbar arretiert.

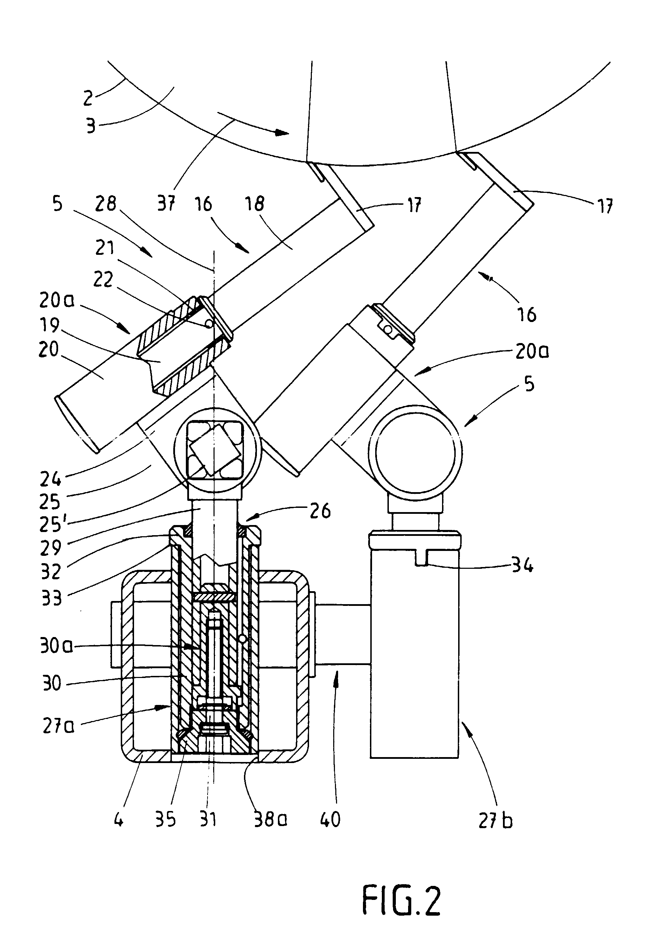

In Fig. 2 bis 4 ist der Aufbau der Abstreifelemente 5 gemäß einer ersten Ausführung sowie deren Anordnung an dem Systemträger 4 dargestellt, der in dem die Abstreifelemente 5 tragenden Abschnitt einen quadratischen Querschnitt aufweist.

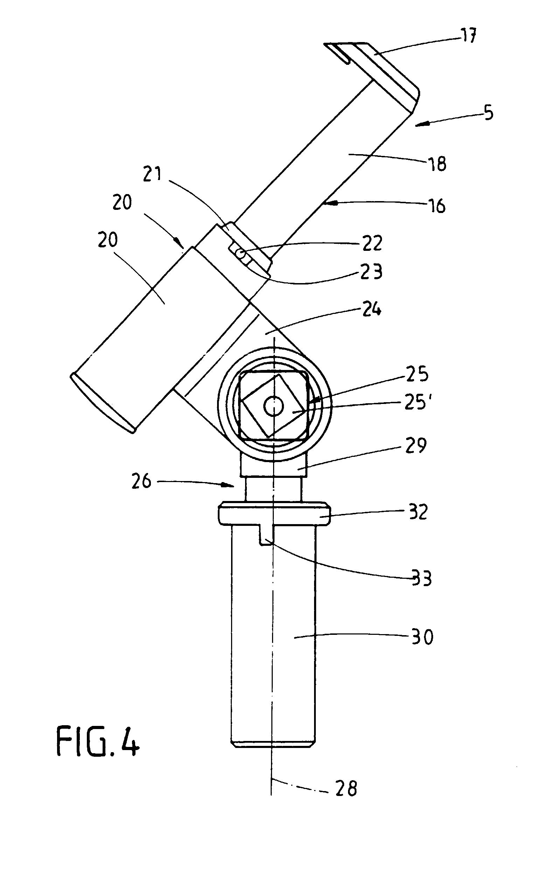

Jedes Abstreifelement 5 weist eine Lamellenstütze 16 auf, an der eine Abstreiflamelle 17 angeordnet ist, die in betriebsbereiter Lage schälend am Gurtband 2 anliegt. Die Lamellenstütze 16 besteht aus einem flachen Profilelement 18, das an seinem oberen Ende die Abstreiflamelle 17 trägt und an seinem unteren Ende in einen Bolzen 19 übergeht, der in einem Drehlage 20a mit einer Lagerhülse 20 begrenzt drehbar gelagert ist. Der Bolzen 19 ist axial gesichert in der Lagerhülse gehalten und weist in seinem Übergangsbereich zu dem Profilelement 18 einen Flansch 21 auf, dessen Durchmesser größer ist als der Durchmesser des Bolzens 19 und der in einer Ausnehmung am oberen Ende der Lagerhülse 20 gelagert ist. Der Flansch 21 hat zwei einander diametral gegenüberliegende Stifte 22, die in kreisbogenabschnittförmigen Ausnehmungen 23 (vgl. Fig. 4) in der Stirnfläche der Lagerhülse (20) derart geführt sind, daß die Lamellenstütze 16 um einen bestimmten Winkel, der zwischen 15° und 30° liegt und z.B. 25° beträgt, in der Lagerhülse 20 begrenzt drehbar ist.

An der Mantelfläche der Lagerhülse 20 ist eine seitlich abstehende Platte 24 angeschweißt, die die Lagerhülse 20 mit einer im Querschnitt quadratischen Achse 25 eines Torsionsfedergelenks 25 verbindet. Dies gestattet ein Verschwenken der Lamellenstütze 16 mit der Abstreiflamelle 17 in der Weise, daß die Abstreiflamelle 17 vom Gurtband 2 abgehoben wird, wenn beispielsweise eine Unebenheit des Gurtbandes auf die Abstreiflamelle 17 aufläuft. Das Torsionsfedergelenk 25 ist folglich mit einem Ende (Achse 25) mit der Lagerhülse 20 und der Lamellenstütze 16 verbunden und mit einem anderen Ende bzw. mit seinem Gehäuse an einer Einsteckvorrichtung 26 befestigt. Diese ist gegen Drehen gesichert in einer entweder im System-Träger 4 selbst angeordneten Halterung 27a oder in einer indirekt mit dem System-Träger 4 verbundenen Halterung 27b gelagert. Der Schnittpunkt der Längsachse 28 der Einsteckvorrichtung 26 mit dem Gurtband 2 liegt jeweils in Drehrichtung der Trommel 3 vor der Anlagelinie der Abstreiflamelle 17 am Gurtband 2, wie die Zeichnung zeigt.

Die Einsteckvorrichtung 26 weist eine Achse 29 auf, die gegen Verdrehen gesichert, aber axial verstellbar in einer in der Halterung 27a bzw. 27b eingesteckten Hülse 30 angeordnet ist. Für die axiale Verstellung der Achse 29 ist eine Stellschraube 31 vorgesehen. Um eine Drehung der Hülse 30 in der Halterung 27a bzw. 27b zu verhindern, hat die Hülse 30 einen auf der ringförmigen Stirnfläche der Halterung 27a bzw. 27b aufliegenden Flansch 32, der zwei einander diametral gegenüberliegende Vorsprünge 33 hat, die in Ausnehmungen 34 in den Halterungen 27a bzw. 27b greifen.

Die Befestigung der Einsteckvorrichtung 26 in der Halterung 27a bzw. 27b erfolgt durch eine Sicherungsschraube 35, die in ein am unteren Abschnitt der Hülse 30 angeordnetes Innengewinde eingeschraubt ist. Die Sicherungsschraube 35 ist eine Innensechskantschraube mit einem kreisförmigen Rand, dessen Durchmesser etwas kleiner ist als der Innendurchmesser der Halterung 27a bzw. 27b. Die Einsteckvorrichtung 26 ist in der Halterung 27a bzw. 27b axial festgelegt sowie gegen Verdrehen gesichert, wenn der Rand der Sicherungsschraube 35 mit einer Konusfläche am unteren Ende der Hülse 30 einen 0-Ring 36 nach außen gegen die Innenwandung der Hülse 30 in eine dort eingelassene Nut drückt. In dieser Lage ist die Sicherungsschraube 35 durch Reibschluß in der Halterung 27a, 27b befestigt.

In der Hülse 30 ist eine Stellbuchse 30a höhenverstellbar angeordnet, an deren Bund 30c die Achse 29 axial abgestützt ist. Die Stellbuchse 30a greift mit einem Zapfenteil 30b in die rohrförmig ausgebildete Achse 29 und ist dort mittels eines Zapfens 30d an der Achse 29 befestigt. Die Stellbuchse 30a ist durch eine seitlich von dem Bund 30c vorstehende und in einer Längsnut 30e in der Hülse 30 axial geführte Nase 30f gegen Verdrehen gesichert, aber axial bis zu einem als Anschlag vorgesehenen Stift 30g verstellbar.

Die axiale Verstellung der Stellbuchse 30a - und damit eine Höhenverstellung der Achse 29 gegenüber der Hülse 30 - wird mittels der Stellschraube 31 bewirkt, die innerhalb der Sicherungsschraube 35 drehbar angeordnet, jedoch in axialer Richtung festgelegt ist, wozu zum einen dre Schraubenkopf und zum anderen ein Wellensicherungsring 30i mit untergelegter Scheibe 30k dient, der in eine in die Stellschraube 31 eingestochene Nut eingesetzt ist. Die Stellschraube 31, die als Innensechskantschraube ausgebildet ist, kann ohne Behinderung von unten hin- und hergedreht werden. Dabei ist sie durch den Wellensicherungsring 30i bzw. den Kopf in axialer Richtung festgelegt, so daß eine Drehbewegung der Stellschraube 31 eine Axialbewegung der Stellbuchse 30a zur Folge hat, in die sie, wie die Zeichnung zeigt, eingeschraubt ist. Die Stellbuchse 30a kann sich, wie bereits erwähnt, nicht mit dre Stellschraube 31 mitdrehen, weil die Nase 30f in der Längsnut 30e eine Drehbewegung verhindert. Die Stellschraube 31 ist wiederum durch einen 0-Ring durch Reibschluß gegen selbstätiges Verstellen gesichert.

Soll ein Abstreifelement 5 aus einer Rohrhaltung 27a, 27b ausgebaut werden, wird zunächst die Sicherungsschraube 35 in der Halterung 27a bzw. 27b gelöst. Nun kann das Abstreifelement 5 oben aus der Halterung 27a bzw. 27b herausgezogen werden. Die Montage erfolgt in umgekehrter Weise. Die jeweils gewünschte Höhenverstellung des Abstreifelements 5 gegenüber dem Gurtband 2 an der Trommel 3 wird in einfacher Weise durch Drehen der Stellschraube 31 herbeigeführt.

Die in Fig. 2 im Schnitt dargestellte Halterung 27a ist in eine im System-Träger 4 angeordnete Öffnung 38a eingesetzt und mit dem System-Träger 4 verschweißt.

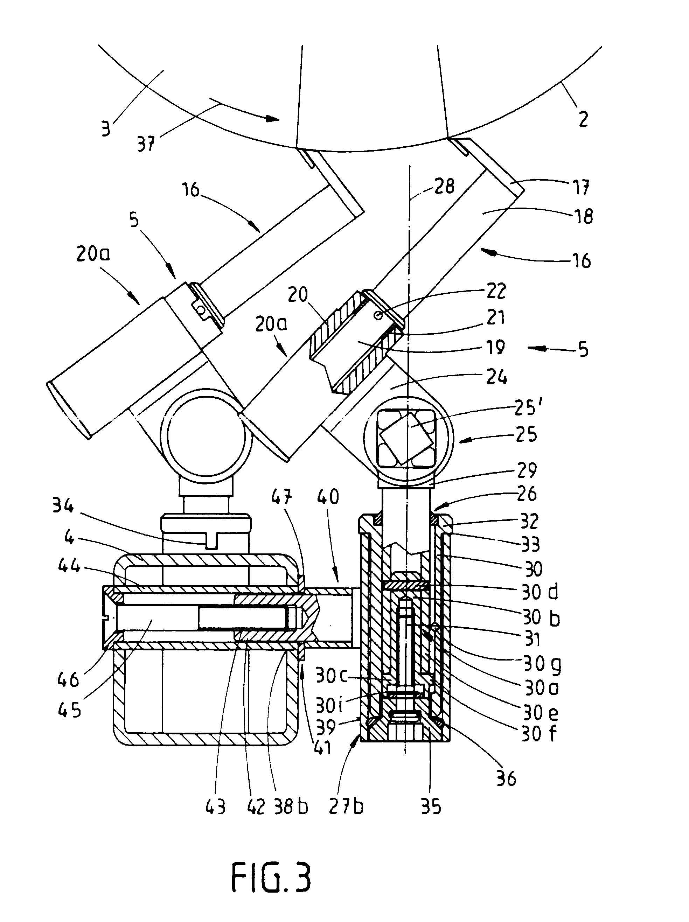

Die in Fig. 3 im Schnitt dargestellte Halterung 27b weist einen an ihrer Mantelfläche 39 festgeschweißten und senkrecht abstehenden Einsteckbolzen 40 auf. Dieser hat einen Absatz 41 und ein freies Ende 42, das eine Gewindebohrung 43 aufweist und in eine den System-Träger 4 durchquerende und dort befestigte Buchse 44 greift. Mittels einer von links- mit Bezug auf die Zeichnung - in die Buchse 44 eingesetzten und in die Gewindebohrung 43 geschraubten Schraube 45 wird der Einsteckbolzen 40 am System-Träger 4 befestigt. Zwischen dem Kopf der Schraube 45 und dem Öffnungsrand der Buchse 44 ist eine Unterlegscheibe 46 angeordnet. Die Öffnung 38b, in der die Buchse 44 befestigt ist, verläuft senkrecht zu der Öffnung 38a für die Halterung 27a im System-Träger 4.

Es ist insbesondere aus Fig. 3 zu erkennen, daß auf das abgesetzte freie Ende 42 des Einsteckbolzens 40 ein Distanzring 47 aufgeschoben ist, der zwischen dem Absatz 41 und der Außenfläche des System-Trägers 4 zur Anlage kommt. Mit dem Distanzring 47 kann die Halterung 27b in vorbestimmten, in Abhängigkeit vom Durchmesser der Trommel 3 ausgewählten Positionen am System-Träger 4 festgelegt werden, um eine vorbestimmte Position des in die Halterung 27b eingesetzten Abstreifelementes 5 zu erreichen.

In Fig. 5 bis 7 ist eine Vorrichtung 1 zum Abstreifen von Förderbändern oder Gurtbändern mit vier in zwei Reihen versetzt hintereinander am System-Träger 4 angeordneten Abstreifelementen 5 gezeigt. Im grundsätzlichen Aufbau sowie insbesondere in der Art der Befestigung am System-Träger 4, nämlich hinsichtlich der Verwendung der Halterungen 27a und 27b sowie der hiermit zusammenwirkenden Einsteckvorrichtung 26 stimmt diese Ausführungsform mit der zuvor beschriebenen Ausführungsform überein. Ein wesentlicher Unterschied der Abstreifelemente 5 der zweiten Ausführungsform besteht darin, daß sie kein an dem Torsionsfedergelenk 25 befestigtes Drehlager 20a für die Lamellenstütze 16 aufweist. Statt dessen wird bei den in Fig. 5 bis 7 dargestellten Abstreifelementen 5 die Drehbarkeit und damit die selbstätige Einstellbarkeit der Abstreiflamelle 48 dadurch erzielt, daß zwischen der Lamellenstütze 49 und der Abstreiflamelle 48 ein Drehlager 50 direkt unterhalb der Abstreiflamelle 48 angeordnet ist. Bei dieser Ausführungsform ist die Lamellenstütze 49 oben als rohrförmiges Element ausgebildet, in das ein an der Abstreiflamelle 48 angeordneter Drehzapfen begrenzt drehbar eingesetzt ist. Es ist jedoch auch möglich, die Abstreiflamelle 48 an ihrer Unterseite mit einer rohrförmigen Lagerbuchse zu versehen, in der ein am oberen Ende der Lamellenstütze 49 befestigter oder dort ausgebildeter Lagerzapfen begrenzt drehbar gelagert ist.

Das untere Ende der Lamellenstütze 49 ist unmittelbar mit dem in Fig. 5 bis 7 nicht sichtbaren Vierkant des Torsionsfedergelenks 25 fest verbunden.

Die Lamellenstütze 49 ist, wie insbesondere Fig. 5 erkennen läßt, im Bereich zwischen ihrem mit dem Torsionsfedergelenk 25 fest verbundenen Ende und dem Drehlager 50 jeweils um einen Winkel β derart gekröpft, daß die Mitte der Abstreiflamelle 48 in der Mittelebene des zugehörigen Torsionsfedergelenks 25 liegt.

Fig. 5 bis 7 lassen erkennen, daß benachbarte Abstreifelemente 5 in gleichen Abständen alternierend in Halterungen 27a bzw. 27b angeordnet sind. Die Abstände zwischen benachbarten Abstreifelementen 5 sind derart gewählt, daß ihre Abstreiflamellen 48 teilweise überlappend an dem Gurtband 2 anzuordnen sind, so daß sich überschneidende Reinigungsbreeiche der Abstreiflamellen 48 ergeben.

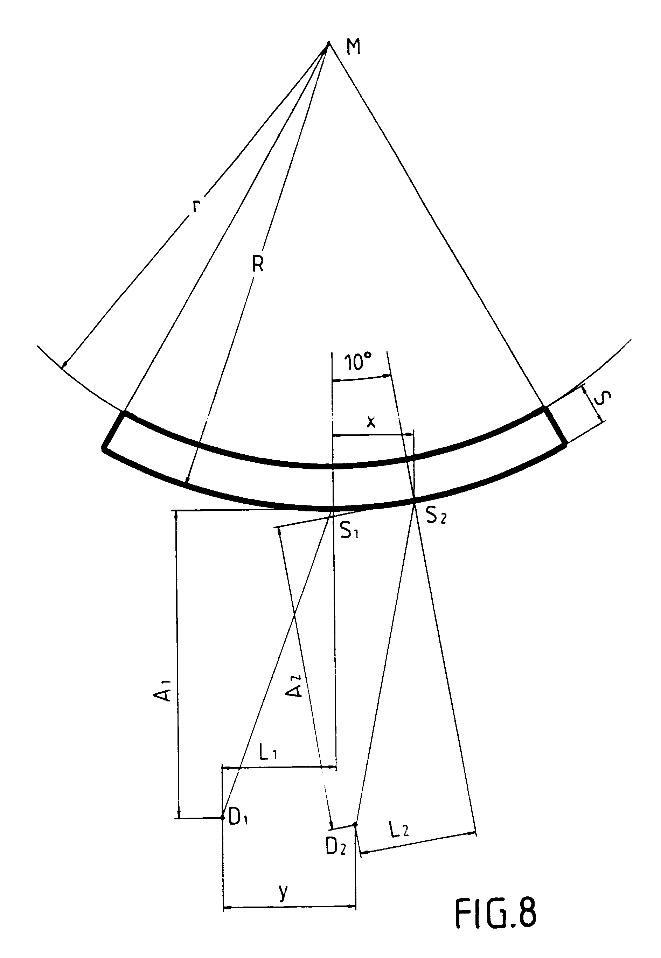

In Fig. 8 sind die geometrischen Verhältnisse einer bevorzugten Ausführungsform der erfindungsgemäßen Vorrichtung schematisch dargestellt, mit denen ein optimales Betriebsverhalten, insbesondere eine kontinuierliche Anlage der Abstreiflamellen 17, 48 am Gurtband 2 mit selbstätiger Winkeleinstellung und ein ruhiger Ablauf der Gurtbandreinigung ohne jegliche am Gurtband 2 anhaftende Rückstände erzielt wird.

Die Längenverhältnisse der einzelnen im folgenden noch zu bezeichnenden Strecken entsprechen einem Ausführungsbeispiel, das sich in der Praxis bewährt hat, und sind maßstabsgetreu verkleinert wiedergegeben.

In Fig. 8 sind die Mittelachse M der Trommel 3 und deren RAdius r angegeben. Das auf der Trommel 3 liegende Gurtband 2 hat eine Dicke s. Die Summe des Radius r der Trommel 3 und der Dicke s des Gurtbandes 2 ist durch die Strecke R dargestellt.

Die Kontaktlinie der Schneidkanten der Lamellen der ersten Reihe von Abstreifelementen ist mit S₁ und die Kontaktlinie der Schneidkanten der Lamellen der zweiten Reihe von Abstreifelementen ist mit S₂ bezeichnet.

Die Torsionsfederachse der ersten Reihe von Abstreifelementen ist mit D₁ und die Torsionsfederachse der zweiten Reihe von Abstreifelementen ist mit D₂ bezeichnet.

Mit dem Bezugszeichen x ist der Abstand der Kontaktlinie S₁ der ersten Reihe von Abstreifelementen von der Kontaktlinie S₂ der zweiten Reihe von Abstreifelementen als Funktion der Summe aus dem Radius r der Trommel 3 und der Dicke s des Gurtbandes bezeichnet. Mit dem Bezugszeichen y ist der Abstand der Torsionsfederachse D₁ der ersten Reihe von Abstreifelementen von der Torsionsfederachse D₂ der zweiten Reihe von Abstreifelementen ebenfalls als Funktion der Summe des Radius r der Trommel 3 und der Dicke s des Gurtbandes bezeichnet.

Mit den Bezugszeichen A₁ und A₂ ist der Abstand zwischen der Torsionsfederachse D₁ der ersten Reihe von Abstreifelementen bzw. der Torsionsfederachse D₂ der zweiten Reihe von Abstreifelementen von einer durch die Kontaktlinie S₁ der ersten Reihe von Abstreifelementen bzw. die Kontaktlinie S₂ der zweiten Reihe von Abstreifelementen verlaufenden Tangente bezeichnet.

In Fig. 8 ist der Abstand L₁ zwischen der Torsionsfederachse D₁ der ersten Reihe von Abstreifelementen und dem durch die Kontaktlinie S₁ der ersten Reihe von Abstreifelementen dargestellt sowie der Abstand L₂ zwischen der Torsionsfederachse D₂ der zweiten Reihe von Abstreifelementen und dem durch die Kontaktlinie S₂ der zweiten Reihe von Abstreifelementen verlaufenden verlängerten Radius r der Trommel 3.

Es hat sich als besonders vorteilhaft erwiesen, die Berührungslinie S₁ der ersten Reihe von Abstreifelementen in einem derartigen Abstand von der Berührungslinie S₂ der zweiten Reihe von Abstreifelementen anzuordnen, daß die beiden durch diese beiden Linien verlaufenden Radien r der Trommel 3 einen Winkel von 10° einschließen.

## Patentansprüche

1. Vorrichtung zum Abstreifen von Verunreinigungen von Gurtbändern (2) in Förderbandanlagen im Bereich einer Antriebs- und/oder Umlenktrommel (3) des Gurtbandes, mit einem an einem Traggerüst (8) für das Gurtband (2) befestigten System-Träger (4), an dem Abstreifelemente (5) angeordnet sind, wobei jedes Abstreifelement eine an einer Lamellenstütze (16;49) befestigte Abstreiflamelle (17;48), die in betriebsbereiter Lage schälend am über die Trommel (3) laufenden Gurtband (2) anliegt, und ein Torsionsfedergelenk (25) aufweist, an dem die Lamellenstütze derart um eine horizontale Achse schwenkbar angeordnet ist, daß sie beim Auftreffen von fest am Gurtband anhaftenden Hindernissen auf die Abstreiflamelle leicht wegschwenken und danach wieder in die betriebsbereite Lage am Gurtband zurückschwenken kann, wobei jede Lamellenstütze (16;49) mittels eines Drehlagers (20a;50) mit begrenztem Drehwinkel schwenkbar gelagert ist, so daß sich die am Gurtband (2) anliegende Abstreiflamelle (17;48) Neigungsänderungen des Gurtbandes (2) im unmittelbaren Anlagebereich der Abstreiflamelle (17;48) durch selbstätige Drehung anpassen kann, wobei das Torsionsfedergelenk (25) jeder Lamellenstütze (16;49) an einer Einsteckvorrichtung (26) befestigt ist, die in einer am System-Träger (4) angebrachten eigenen Halterung (27a,27b) angeordnet ist, wobei die Längsachse (28) jeder Einsteckvorrichtung (26) das Gurtband (2) in einem in Drehrichtung der Trommel (3) vor der Kontaktlinie (S) der Abstreiflamelle (17;48) liegenden Punkt schneidet, und wobei die Einsteckvorrichtung (26) eine axial verschiebbar, jedoch unverdrehbar in eine Hülse (30) eingesteckte Achse (29) aufweist, die in Richtung ihrer Längsachse (28) mittels einer von unten zu betätigenden Stellschraube (31) verstellbar ist, wobei die Hülse (30) mittels einer konzentrisch zu ihr angeordneten Sicherungsschraube (35) mit konischer Endfläche und einem 0-Ring (36), der von der Sicherungsschraube über deren konische Endfläche gegen die konzentrisch zur Hülse (30) angeordnete Halterung (27a, 27b) gedrückt wird, arretierbar ist.

2. Vorrichtung nach Anspruch 1, dadurch gekennzeichnet, daß das Drehlager (50) zwischen der Lamellenstütze (49) und der Abstreifelemente (48) angeordnet ist.

3. Vorrichtung nach Anspruch 1 oder 2, dadurch gekennzeichnet, daß jede Halterung (27a) in einer Öffnung (38a) des System-Trägers (4) befestigt ist, deren Längsachse auf das Gurtband (2) gerichtet ist (Fig. 2).

4. Vorrichtung nach Anspruch 1 oder 2, dadurch gekennzeichnet, daß jede Halterung (27b) einen an ihrer Mantelfläche (39) befestigten Einsteckbolzen (40) hat, der in eine seitliche Öffnung (38b) des System-Trägers (4) eingesteckt und in dieser befestigt ist und dessen Längsachse senkrecht zur Längsachse der Halterung (27b) verläuft (Fig. 3).

5. Vorrichtung nach einem der Ansprüche 1 bis 4, dadurch gekennzeichnet, daß der System-Träger (4) in gleichen Abständen abwechselnd rechtwinklig zueinander verlaufende Öffnungen (38a,38b) für das Einsetzen der Halterungen (27a; 27b)) und für das Einstecken der Einsteckbolzen (40) aufweist; so daß Lamellen-Stützen (16;49) in zwei parallelen Reihen angebracht werden können.

6. Vorrichtung nach einem der Ansprüche 1 bis 5, dadurch gekennzeichnet, daß die Lamellenstützen (16;49) außerhalb der Lagerhülse (20) (Fig. 1 bis 4) bzw. zwischen dem Drehlager (50) und dem Torsionsfedergelenk (25) (Fig. 5 bis 7) plattenförmig ausgebildet sind, wobei die Schmalseite der Lamellenstütze (16;49) dem Förderband (2) zugewandt ist.

7. Vorrichtung nach einem der Ansprüche 1 bis 6, dadurch gekennzeichnet, daß das Drehlager (20a, 50) für eine von Hand vorzunehmende Einstellung und Winkelverstellung der Lamellenstütze (16;49) bzw. der Abstreiflamelle (17;48) ausgebildet ist.

8. Vorrichtung nach einem der Ansprüche 1 bis 7, dadurch gekennzeichnet, daß der Winkel des Schwenkbereichs des frei drehbaren Drehlagers (20a;50) zwischen 15° und 30°, vorzugsweise 25°, beträgt.

9. Vorrichtung nach einem der Ansprüche 1 bis 8, dadurch gekennzeichnet, daß die Lagerhülse (20) zumindest eine Ausnehmung (23) hat, in der ein mit der Lamellenstütze (16) verbundenes Begrenzungselement, z.B. ein Stift (22), geführt ist, um den Drehwinkel zwischen der Lamellenstütze (16) und der Lagerhülse (20) zu begrenzen.

10. Vorrichtung nach einem der Ansprüche 1 bis 9, dadurch gekennzeichnet, daß die Lagerhülse (20) mantelseitig derart an dem Torsionsfedergelenk (25) befestigt ist, daß ihre Längsachse im Abstand von der Achse des Torsionsfedergelenkes liegt.

11. Vorrichtung nach einem der Ansprüche 1 bis 10, dadurch gekennzeichnet, daß die Lamellenstütze (49) mit ihrem der Abstreiflamelle (48) abgewandten Ende an dem Torsionsfedergelenk (25) befestigt ist und relativ zur Einsteckvorrichtung (26) um die Gelenkachse des iorsionstedergeienks (25) federnd verdrehbar ist.

12. Vorrichtung nach Anspruch 11, dadurch gekennzeichnet, daß an der Hülse (30) ein Flansch (32) angeordnet ist, der auf der Ringfläche der Halterung (27a,27b) aufliegt.

13. Vorrichtung nach Anspruch 1 oder 12, dadurch gekennzeichnet, daß am oberen Ende der Halterung (27a,27b) mindestens eine Ausnehmung (34) vorgesehen ist, in welche als Verdrehsicherung ein korrespondierend ausgebildeter Vorsprung (33) der Einsteckvorrichtung (26) eingreift.

14. Vorrichtung nach einem der Ansprüche 1, 12 oder 13, dadurch gekennzeichnet, daß in der Hülse (30) eine Stellbuchse (30a) höhenverstellbar angeordnet ist, an der die Achse (29) axial abgestützt ist.

15. Vorrichtung nach Anspruch 14, dadurch gekennzeichnet, daß die Stellbuchse (30a) mit einem Zapfenteil (30b) in die rohrförmig ausgebildete Achse (29) greift und dort an der Achse (29) befestigt ist und mit einem Bund (30c) die Achse (29) untergreift sowie drehfest, aber axial verstellbar, mit der Hülse (30) verbunden ist.

16. Vorrichtung nach einem der Ansprüche 1 bis 15, dadurch gekennzeichnet, daß der Einsteckbolzen (40) (Fig. 3) einen Absatz (41) und ein sich daran anschließendes freies Ende (42) hat, das eine Gewindebohrung (43) enthält und in eine im Systemträger (4) befestigte Buchse (44) greift, wobei der Einsteckbolzen (40) mittels einer die Buchse (44) durchgreifenden und in die Gewindebohrung (43) geschraubten Schraube (45) am Systemträger (4) befestigt ist.

17. Vorrichtung nach Anspruch 16, dadurch gekennzeichnet, daß auf dem freien Ende (42) des Einsteckbolzens (40) ein Distanzring (47) zwischen dem Absatz (41) und der Außenfläche des System-Trägers (4) angeordnet ist.

18. Vorrichtung nach einem der Ansprüche 1 bis 17, dadurch gekennzeichnet, daß die Lamellenstütze (16;49) um einen Winkel in Richtung des Torsionsfedergelenks (25) gekröpft ist, so daß die Mittelebene der Abstreiflamelle (17;48) im wesentlichen in oder nahe der Mittelebene der Einsteckvorrichtung (26) liegt (Fig. 5).

19. Vorrichtung nach einem der Ansprüche 1 bis 18, dadurch gekennzeichnet, daß sich im Falle einer zweireihigen Anordnung der Abstreiflamellen (17;48) längs des System-Trägers (4) die Torsionsdrehfederachse (D₂) der zweiten Reihe von Abstreiflamellen in der gleichen geometrischen Zuordnung zu der Kontaktlinie (S₂) befindet wie die Torsionsfederachse (D₁) der ersten Reihe von Abstreiflamellen zur Kontaktlinie (S₁).

## Claims

1. Device for stripping soiling from belt bands (2) in conveyor belt installations in the vicinity of a drive and/or deflection roller (3) of the belt band, including a system carrier (4) provided on a support frame (8) of belt band (2) and supporting stripping elements (5), each of said stripping elements comprising a stripping blade (17; 48) secured to a blade holder (16; 49), wherein in operational position said stripping blade (17; 48) strippingly contacts the belt band (2) conveyed on deflection roller (3), and further comprising a torsion bar (25) on which said blade holder is pivoted around a horizontal axis in such a manner that when obstacles solidly adhering to the belt band contact the stripping blade it may be easily deflected and thereafter returned into the operational position at the belt band, each of said blade holders (16; 49) being tiltingly supported by means of a pivot bearing (20a; 50) having a limited pivot angle, so that the stripping blade (17; 48) contacting the belt band (2) may compensate by means of automatic rotation any inclination changes of the belt band in the immediate vicinity of the contact area of stripping blade (17; 48), the torsion bar (25) of each of said blade holders (16; 49) being connected to a plug-in element (26) provided in a separate fitting (27a, 27b) located on said system carrier (4), wherein the longitudinal axis (28) of each of said plug-in elements (26) intersects the belt band (2) at a point located in front of the contacting line (S) of said stripping blade (17; 48) and wherein said plug-in element (26) comprises an axially slidable torsion-resistant shaft (29) adjustably held in a sleeve (30) in the direction of its longitudinal axis (28) by means of an adjustment screw (31) operated from the lower side thereof, said sleeve (30) being locked by means of a concentric locking screw (35) having a conical end face and including an O-ring (36) which are forced by means of the conical end face of the locking screw against fittings (27a, 27b) positioned in concentric relationship with said sleeve (30).

2. Device as defined by claim 1,
**characterized in that**
said pivot bearing (50) is provided intermediate blade holder (49) and stripping elements (48).

3. Device as defined by either of claims 1 or 2,
**characterized in that**
each of said fittings (27a) is received in an aperture (38a) of the system carrier (4), the longitudinal axis of said fittings (27a) facing the belt band (2) (Fig. 2).

4. Device as defined by either of claims 1 or 2,
**characterized in that**
each of said attaches (27b) comprises on its circumference (39) a stop pin (40) mounted and secured in a lateral aperture (38b) of said system carrier (4), the longitudinal axis of which extends normal to said fitting (27b).

5. Device as defined by either of claims 1 to 4,
**characterized in that**
said system carrier (4) comprises alternating regularly spaced rectangular apertures (38a, 38b) for mounting said fittings (27a; 27b) and for mounting said stop pins (40), so that said blade holders (16; 49) are provided in two parallel series.

6. Device as defined by either of claims 1 to 5,
**characterized in that**
at the exterior side of bearing sleeve (20) (fig. 1 to 4) or intermediate said pivot bearing (50) and said torsion bar (25) the blade holders are designed in the form of plates (fig. 5 to 7), the narrow edge of said blade holders (16; 49) facing the belt band (2).

7. Device as defined by either of claims 1 to 6,
**characterized in that**
said pivot bearing (20a, 20b) is designed for manual adjustment and angular adjustment of said blade holders (16, 49) and said stripping blade (17; 48), respectively.

8. Device as defined by either of claims 1 to 7,
**characterized in that**
the pivot angle of the freely rotating pivot bearing (20a; 50) ranges between 15° and 30°, and preferably amounts to 25°.

9. Device as defined by either of claims 1 to 8,
**characterized in that**
said bearing sleeve (20) comprises at least one recess (23) guiding a limit stop, such as for instance a pin (22) connected to said blade holder (16) for limiting the rotation angle between said blade holder (16) and said bearing sleeve (20).

10. Device as defined by either of claims 1 to 9,
**characterized in that**
the circumference of said bearing sleeve (20) is connected to the torsion bar (25) such that its longitudinal axis is provided in spaced relationship with respect to the axis of the torsion bar.

11. Device as defined by either of claims 1 to 10,
**characterized in that**
the end portion of the blade holder (49) opposite to said stripping blade (48) is connected to the torsion bar (25) and elastically rotatable around the articulation axis of said torsion bar (25) relative to the plug-in element (26).

12. Device as defined by claim 11,
**characterized in that**
sleeve (30) is connected to a flange (32) positioned on the circular surface of fittings (27a, 27b).

13. Device as defined by either of claims 1 or 12,
**characterized in that**
the upper end portion of fitting (27a, 27b) comprises at least one recess (34) torsionally meshing with a mating projection (33) of said plug-in element (26).

14. Device as defined by either of claims 1, 12 or 13,
**characterized in that**
sleeve (30) comprises a vertically adjustable adjustment bushing (30a) axially supporting shaft (29).

15. Device as defined by claim 14,
**characterized in that**
by means of a bolt portion (30b) said adjustment bushing (30a) engages the tubular shaft (29) and is connected at that position to said shaft (29) and meshes by means of a collar (30c) with the lower side of said shaft (29) while being torsionally but axially adustably connected to said sleeve (30).

16. Device as defined by either of claims 1 to 15,
**characterized in that**
said stop pin (40) (fig. 3) comprises a shoulder (41) and a continuous free end (42) provided with a female thread (43) engaging said system carrier (4), and in that said stop pin (40) is connected to the system carrier (4) by means of a screw (45) penetrating said sleeve (44) and screwed into said female thread (43).

17. Device as defined by claim 16,
**characterized in that**
a spacer ring (47) is provided intermediate said shoulder (41) and the external face of said system carrier (4) on the free end portion (42) of stop pin (40).

18. Device as defined by either of claims 1 to 17,
**characterized in that**
said blade holder (16; 49) is bent at right angles in the direction of said torsion bar (25) in a manner such that the medium plane of said stripping blade (17; 48) is located substantially within or in the vicinity of the medium plane of said plug-in element (26) (fig. 5).

19. Device as defined by either of claims 1 to 18,
**characterized in that**
in case of a two series arrangement of said stripping blades (17; 48) in the longitudinal direction of said system carrier (4), the torsion bar axis (D₂) of the second row of stripping blades is located in the same geometrical arrangement with respect to contact line (S₂) as the axis of the torsion bar (D₁) of the first series of stripping blades with respect to contact line (S1).

## Revendications

1. Dispositif pour retirer les impuretés présentes sur les courroies (2) de convoyeurs à bandes au niveau d'un cylindre moteur ou déflecteur (3), comprenant un système support (4) fixé sur un bâti-cadre (8) de la courroie (2) sur laquelle sont prévues des éléments racleurs (5), chacun de ces éléments racleurs comprenant une lame de raclage (17; 48) montée sur un porte-lame (16; 49) et s'appuyant en position opérationnelle de manière raclante sur la courroie (2) guidée sur le déflecteur (3), et comprenant en outre une barre de torsion (25) sur laquelle ledit porte-lame est articulée autour d'un axe horizontal de manière à pouvoir être facilement déviée en cas de contact de la lame de raclage avec des obstacles solides adhérant à la courroie pour retourner ensuite dans la position opérationnelle sur la courroie, chacun des porte-lames (16; 49) étant articulé de manière basculante au moyen d'un coussinet de pivotement (20a; 50) à angle de rotation limité permettant à la lame de raclage (17; 48) s'appuyant sur la courroie (2) de s'adapter par rotation automatique à tout changement d'inclinaison de la courroie (2) dans la région d'appui direct de la lame de raclage (17; 48), et dans laquelle la barre de torsion (25) de chacun des porte-lames (16; 49) est fixé à un assemblage à emboîtement (26) disposé dans un logement séparé (27a, 27b) prévu sur le système support (4), l'axe longitudinal (28) dudit assemblage à emboîtement (26) coupant la courroie (2) à un point situé devant la ligne de contact (S) de la lame de raclage (17; 48) dans le sens de rotation du déflecteur (3), et dans lequel l'assemblage à emboîtement (26) comprend un arbre (29) inséré de manière axialement déplaçable mais indéformable dans un manchon (30) qui, dans le sens de sa direction longitudinale (28), est réglable au moyen d'une vis de réglage (31) actionnée par le coté inférieur, ledit manchon (30) étant bloqué au moyen d'une vis de retenue (35) concentrique à extrémité conique ainsi que d'un joint torique (36) forcé par l'intermédiaire de l'extrémité conique de la vis de retenue contre l'attache (27a, 27b) s'étendant de manière concentrique par rapport au manchon (30).

2. Dispositif suivant la revendication 1,
**caractérisé en ce que**
le coussinet de pivotement (50) est disposé entre le porte-lame (49) et les éléments de raclage (48).

3. Dispositif suivant l'une des revendications 1 ou 2,
**caractérisé en ce que**
chacun des attaches (27a) est disposé dans une ouverture (38a) du système support (4) dont l'axe longitudinal est dirigé sur la courroie (2) (fig. 2).

4. Dispositif suivant l'une des revendications 1 ou 2,
**caractérisé en ce que**
chacune des attaches (27b) comprend une cheville démontable (40) disposée sur sa circonférence (39) enfichée et fixée dans une ouverture latérale (38b) du système support (4) et dont l'axe longitudinal s'étend en direction verticale par rapport à l'axe longitudinal de l'attache (27b) (fig. 3).

5. Dispositif suivant l'une des revendications 1 à 4,
**caractérisé en ce que**
le système support (4) est pourvu à espaces réguliers d'ouvertures rectangulaires (38a, 38b) pour recevoir les attaches (27a; 27b) et pour introduire des chevilles démontables (40) permettant ainsi de disposer les porte-lames (16; 49) en deux séries parallèles.

6. Dispositif suivant l'une des revendications 1 à 5,
**caractérisé en ce que**
à l'extérieur de la douille de connexion (20) (fig. 1 à 14), respectivement entre le coussinet de pivotement (50) et la barre de torsion (25) (fig. 5 à 7) les porte-lames (16; 49) ont la forme de plaques, et en ce que le petit coté du porte-lame (16; 49) est dirigé sur la courroie (2).

7. Dispositif suivant l'une des revendications 1 à 6,
**caractérisé en ce que**
le coussinet de pivotement (20a, 50) est conçu pour un réglage manuel et un réglage angulaire du porte-lame (16; 49) ou de la lame de raclage (17; 48).

8. Dispositif suivant l'une des revendications 1 à 7,
**caractérisé en ce que**
l'angle de pivotement du coussinet de pivotement (20a; 50) à rotation libre est compris entre 15° et 30°, et s'élève de préférence à 25°.

9. Dispositif suivant l'une des revendications 1 à 8,
**caractérisé en ce que**
la douille de connexion (20) comprend au moins un dégagement (23) dans lequel est guidé un élément d'arrêt, comme par exemple un pion (22) lié au porte-lame (16) afin de limiter l'angle de rotation entre le porte-lame (16) et la douille de connexion (20).

10. Dispositif suivant l'une des revendications 1 à 9,
**caractérisé en ce que**
par l'intermédiaire de sa circonférence la douille de connexion (20) est fixée de telle manière au coussinet de pivotement (25) que son axe longitudinal est espacé par rapport à l'axe du coussinet de pivotement.

11. Dispositif suivant l'une des revendications 1 à 10,
**caractérisé en ce que**
l'extrémité du porte-lame (49) opposée à la lame de raclage (48) est fixée au coussinet de pivotement (25) et peut être tournée de façon élastique de façon relative par rapport à l'assemblage à emboîtement (26) autour de l'axe d'articulation de la barre de torsion.

12. Dispositif suivant la revendication 11,
**caractérisé en ce que**
sur le manchon (30) est disposée une bride (32) s'appuyant sur la surface circulaire de l'attache (27a, 27b).

13. Dispositif suivant l'une des revendications 1 ou 12,
**caractérisé en ce que**
l'extrémité supérieure de l'attache (27a, 27b) comprend au moins un dégagement (34) dans lequel s'emboîte une projection correspondante (33) de l'assemblage à emboîtement (26) et agissant comme moyen de résistance à la torsion.

14. Dispositif suivant l'une des revendications 1, 12 ou 13,
**caractérisé en ce que**
le manchon (30) comprend une douille (30a) réglable en hauteur portant l'arbre (29) en direction axiale.

15. Dispositif suivant la revendication 14,
**caractérisé en ce que**
la douille réglable (30a) s'emboîte par l'intermédiaire d'un pion dans l'arbre tubulaire (29) et est fixé dans cette position sur le coté inférieur de l'arbre (29) tout en étant lié de façon axialement réglable mais indéformable au manchon (30).

16. Dispositif suivant l'une des revendications 1 à 15,
**caractérisé en ce que**
la cheville démontable (40) (fig. 3) comporte un épaulement (41) suivi d'une extrémité libre (42) et comprenant un taraudage (43) et s'emboîte dans une douille (44) montée dans le système support (4), et en ce que la cheville démontable (40) est fixée au système support (4) au moyen d'une vis (45) traversant la douille (44) et vissée dans le taraudage (43).

17. Dispositif suivant la revendication 16,
**caractérisé en ce que**
sur l'extrémité libre (42) de la cheville démontable (40) est monté une entretoise (47) disposée entre l'épaulement (41) et la face extérieure du système support (4).

18. Dispositif suivant l'une des revendications 1 à 17,
**caractérisé en ce que**
le porte-lame (16; 49) est angulairement coudé vis-à-vis de la barre de torsion (25) de telle manière que le plan médian de la lame de raclage (17; 48) est situé essentiellement à l'intérieur ou à proximité du plan médian de l'assemblage à emboîtement (26) (fig. 5).

19. Dispositif suivant l'une des revendications 1 à 18,
**caractérisé en ce que**
en cas d'une disposition des lames de raclage (17, 48) en deux séries suivant la direction logitudinale du système support (4), l'axe de la barre de torsion (D₂) de la deuxième série de lames de raclage se trouve dans la même position géométrique par rapport à la ligne de contact (S₂) que l'axe de la barre de torsion (D₁) de la première série de lames de raclage vis-à-vis de la ligne de contact (S₁).
